# EUROPÄISCHE PATENTSCHRIFT

(11) **EP 1 610 050 B1**
(45) Veröffentlichungstag und Bekanntmachung des Hinweises auf die Patenterteilung: **28.03.2007**
(21) Anmeldenummer: 04024445.1
(22) Anmeldetag: 14.10.2004
(51) Int. Cl.: F16L 59/02, E04F 17/02

(54) **Rohrisolierungselement zur Wärme- und/oder Schalldämmung einer Rohrleitung**
Pipe insulation element for heat and/or sound insulation of a pipeline
Elément d'isolation de tuyau pour l'isolation thermique et/ou acoustique d'un tuyau

(30) Priorität: 25.06.2004 DE 202004010026 U
(43) Veröffentlichungstag der Anmeldung: 28.12.2005
(73) Patentinhaber: Deutsche Rockwool Mineralwoll GmbH & Co. OHG, 45966 Gladbeck (DE)
(72) Erfinder: Nowack, Peter, 45879 Gelsenkirchen (DE)
(74) Vertreter: Wanischeck-Bergmann, Axel

(56) Entgegenhaltungen:
- EP-A- 1 031 782
- FR-A- 1 069 988
- US-A- 4 025 680
- US-A- 5 056 564
- US-A- 5 322 181

## Beschreibung

Die Erfindung betrifft ein Rohrisolierungselement zur Wärme- und/oder Schalldämmung einer Rohrleitung, insbesondere eines Schornsteinsystems, mit zumindest einer Rohrschale aus Mineralfasem, die eine äußere Mantelfläche und eine innere Mantelfläche aufweist, wobei die äußere und die innere Mantelfläche im Wesentlichen parallel verlaufend angeordnet sind.

Aus dem Stand der Technik sind Rohrschalen bekannt. Sie bestehen beispielsweise aus einer oder mehreren Dämmplatten, die eine bestimmte Biegefähigkeit aufweisen, so daß sie an den Krümmungsradius einer Rohrleitung angepaßt werden können. Derartige Rohrschalen sind aber auch bei Rohrleitungen mit einem von einem kreisförmigen Querschnitt abweichenden Querschnitt, beispielsweise einem polygonalen Querschnitt verwendbar. Die voranstehend beschriebenen Rohrschalen dienen insbesondere der Wärmedämmung von dreischaligen Schornsteinen, die aus einem Rauchrohr, einer Dämmschicht und Mantelsteinen bestehen. Hierbei ist das Rauchrohr, welches aus übereinander angeordneten Rohrschüssen besteht, innerhalb der Mantelsteine angeordnet. Zwischen den Mantelsteinen und den Rohrschüssen des Rauchrohres, welches im Übrigen auch einstückig ausgebildet sein kann, sind Dämmelemente angeordnet, die beispielsweise aus Mineralwolle, insbesondere Steinwolle bestehen und die Rohrschale bilden.

Aus dem Stand der Technik ist es auch bekannt, Rohrleitungen zum Zwecke der Dämmung mittels entsprechend ausgebildeter Dämmatten zu umwickeln, so zum Beispiel aus der US-A-4 025 680 der US-A-5 056 564, der FR-A-1 069 988 oder der US-A-5 322 181. Die aus der nächstkommenden US-A-4 025 680 bekannte Dämmatte zeichnet sich dadurch aus, daß sie aus Streifen gebildet ist, wobei die Fasern des die Streifen bildenden Materials abwechselnd längs bzw. quer zum zu isolierenden Rohr ausgerichtet sind. Aufgrund dieser Ausgestaltung ist es möglich, die Dämmatte auch um Rohre mit einem verhältnismäßig kleinen Durchmesser herumzuwickeln.

Das Rauchrohr besteht insbesondere aus grobkeramischen Materialien, wie beispielsweise Schamotte und kann im Querschnitt rund oder im Wesentlichen polygonal ausgebildet sein, wobei die Kanten eines im Querschnitt polygonal ausgebildeten Rauchrohres aus strömungstechnischen und aus werkstofftechnischen Gründen abgerundet sind. Die Montage dieser Schornsteine erfolgt in der Weise, daß zunächst Mantelsteine unter Verwendung von Mörtel aufeinandergesetzt werden. Die Zahl der aus Gewichtsgründen kürzeren Mantelsteine ist abhängig von der Länge der Rauchrohrsegmente, d.h. der Rohrschüsse, welche unter Zwischenlage der Dämmelemente in den Mantelsteinen angeordnet werden.

Die die Rohrschale bildenden Dämmelemente stützen das Rauchrohr gegen den Mantelstein ab und müssen genau eingepaßt werden, so daß eine vollständige Wärmedämmung erzielt wird, die nicht durch Unstetigkeitsstellen im Bereich der Dämmelemente, d.h. zwischen benachbarten Dämmelementen beeinträchtigt wird. Derartige Dämmelemente haben in der Regel eine Materialstärke von 3 bis 5 cm, so daß es sich hier um verhältnismäßig dünne Platten handelt. Durch den hohen Reibungskoeffizient des Dämmstoffes auf der Mantelsteinoberfläche bzw. der Oberfläche des Rauchrohres kann es zu Beschädigungen der Dämmelemente kommen. Es ist auch möglich, daß der hohe Reibungskoeffizient eine Stauchung der eingeschobenen Dämmelemente verursacht, so daß benachbarte Dämmelemente mit ihren Kanten nicht vollständig aufeinanderliegen. Darüber hinaus besteht die Gefahr, daß die dünnen Dämmstoffplatten knicken, so daß zwischen Mantelstein und Rauchrohr Bereiche entstehen, die nicht ausreichend wärmegedämmt sind, da offene Fugen an den Stoßstellen der Platten den Wärmedurchlaßwiderstand der Dämmschicht deutlich reduzieren.

Aus dem Stand der Technik sind darüber hinaus Rohrisolierungselemente, nämlich Mineralwolle-Rohrschalen mit einer gleichbleibenden Rohdichteverteilung über den gesamten Querschnitt bekannt. Diese Rohrisolierungselemente werden zur Wärme-Kälte- und/oder Schalldämmung sowie als Brandschutzbekleidung bei Rohrleitungen verwendet und bestehen beispielsweise aus zwei im Querschnitt halbkreisförmig ausgebildeten Abschnitten, die zusammengefügt in ihrem hohlen Mittelbereich ein Rohr aufnehmen. Es sind aber auch andere Rohrisolierungselemente bekannt, nämlich solche, die einteilig ausgebildet sind oder aus einer Vielzahl von kreisbogenabschnittförmig ausgebildeten Elementen bestehen. Diesbezüglich wird auf die DE 198 31 752 A1, die DE 296 80 532 U1 und die DE 100 42 254 A1 verwiesen.

Die Isolierung von Rohrleitungen erfolgt insbesondere in der Haustechnik. Rohrleitungen in der Haustechnik wurden in der Vergangenheit insbesondere aus verzinkten Stahlrohren oder Kupferrohren hergestellt.

Zwischenzeitlich hat sich die Verwendung von Kunststoffleitungen bzw. -rohren und Leitungen aus nicht rostendem Stahl als besonders vorteilhaft erwiesen, wobei die Kupferleitungen einen Anteil von 50 %, die Kunststoffleitungen einen Anteil von 35 %, die Leitungen aus verzinktem Stahl einen Anteil von 9 % und die Leitungen aus nicht rostendem Stahl einen Anteil von 6 % ausmachen. Hierbei werden Rohrleitungen mit unterschiedlichen Außendurchmessern verwendet. Um derartige Rohrleitungen in kurzer Zeit isolieren zu können, müssen die in der Hausinstallation tätigen Handwerksunternehmen eine Vielzahl von Rohrisolierungselementen vorhalten. Diese Rohrisolierungselemente müssen sowohl hinsichtlich der unterschiedlichen Rohraußendurchmesser, aber auch hinsichtlich der unterschiedlichen Grundmaterialien der Rohrleitungen vorgehalten werden. Demzufolge resultiert hieraus eine umfangreiche Lagerhaltung mit den erforderlichen Lagerflächen sowohl im Bereich des verarbeitenden Betriebes, des Handels, als auch im Bereich der die Rohrisolierungselemente herstellenden Unternehmen.

Bei der Verarbeitung der hier in Rede stehenden Rohrisolierungselemente kommt es zum einen darauf an, daß sich die Rohrisolierungselemente möglichst großflächig an die zu isolierenden Rohrleitungen anlegen, so daß Zwischenräume zwischen den Rohrisolierungselementen und der Rohrleitung vermieden werden. Andererseits ist darauf zu achten, daß die Rohrisolierungselemente ausreichend fest an der Rohrleitung befestigt werden. Zu diesem Zweck weisen eine Vielzahl von Rohrisolierungselementen eine Kaschierung auf, welche werkseitig eine selbstklebende Überlappung haben. Bei der Verarbeitung wird eine Schutzfolie von der Klebefläche entfernt und die selbstklebende Überlappung wird auf die Rohrschalenaußenseite mit der Kaschierung verklebt (vgl. US 5 427 849). Ergänzend hierzu, wie auch bei nicht kaschierten Rohrleitungselementen kann ein Wickeldraht vorgesehen sein, der außenseitig an den Rohrisolierungselementen verspannt wird.

Ausgehend von diesem Stand der Technik liegt der Erfindung die **Aufgabe** zugrunde, ein Rohrisolierungselement zur Wärme- und/oder Schalldämmung einer Rohrleitung derart weiterzubilden, daß das Rohrisolierungselement in einfacher und kostengünstiger Weise herstellbar ist und gleichzeitig bei einer Vielzahl von Anwendungsfällen verwendbar ist, insbesondere auf einen bestimmten Bereich von Rohrleitungen hinsichtlich des Durchmessers anpaßbar und darüber hinaus auch in Hohlräumen zwischen beabstandet zueinander und ineinander angeordneten Rohrleitungen einsetzbar zu sein.

Die **Lösung** dieser Aufgabenstellung sieht vor, daß die Rohrschale zumindest einen radial ausgerichteten Bereich aufweist, der elastifiziert ist, so daß die Rohrschale in diesem Bereich eine gegenüber benachbarten Bereichen erhöhte Flexibilität in tangentialer und/oder radialer Richtung aufweist, wobei sich der Bereich von der inneren Mantelfläche zur äußeren Mantelfläche erstreckt und wobei die Rohrschale im elastifizierten Bereich gewalkt ist.

Das Rohrisolierungselement besteht somit aus zumindest einer Rohrschale mit einem elastifizierten Bereich, der es ermöglicht, die Rohrschale in tangentialer und/oder radialer Richtung zu komprimieren bzw. zu dehnen, so daß zum einen der die Rohrleitung aufnehmende Innenraum der Rohrschale an den Außendurchmesser der Rohrleitung anpaßbar ist und zum anderen auch die Außenmantelfläche hinsichtlich des Durchmessers der Rohrschale variabel ist, so daß die Rohrschale in einfacher Weise bei dreischaligen Schomsteinsystemen verwendbar ist, bei denen die Rohrschale zwischen den Mantelsteinen und dem Rauchrohr eingesetzt wird. Darüber hinaus ist das erfindungsgemäße Rohrisolierungselement auch bei den auf dem Markt bekannten Edelstahlschornsteinen verwendbar, wobei problemlos Fertigungstoleranzen der Edelstahl- bzw. Keramikrohre durch die Flexibilität der Rohrschale ausgeglichen werden können. Hierbei wird insbesondere die Problematik der Rohrisolierungselemente mit zu geringem oder zu großem Innendurchmesser vermieden.

Nach einem weiteren Merkmal der Erfindung ist vorgesehen, daß die Rohrschale als Vollschale und demzufolge einteilig ausgebildet ist. Eine alternative Ausgestaltung sieht vor, daß die Rohrschale aus zwei oder mehreren Elementen ausgebildet ist und daß der elastifizierte Bereich an den Stoßstellen aneinander angrenzende Elemente angeordnet ist.

Beide Ausführungsformen erlauben eine einfache und schnelle Anpassung des Rohrisolierungselementes an die Verwendungsart und insbesondere die Einbaubedingungen des Rohrisolierungselementes.

Es ist femer vorgesehen, dass die Rohrschale mehrere elastifizierte Bereiche aufweist, um die Variabilität des Rohrisolierungselementes zu vergrößem. Die elastifizierten Bereiche sind vorzugsweise radial gegenüberliegend in der Rohrschale angeordnet, soweit zwei elastifizierte Bereiche oder ein geradzahliges Vielfaches an elastifizierten Bereichen vorgesehen ist. Bei einer ungeraden Anzahl von elastifizierten Bereichen hat es sich als vorteilhaft erwiesen, diese in gleichmäßigen Abständen über den Umfang der Rohrschale verteilt anzuordnen.

Nach einem weiteren Merkmal der Erfindung ist vorgesehen, dass sich der elastifizierte Bereich über die gesamte Länge der Rohrschale erstreckt. Das Rohrisolierungselement ist somit insgesamt an die zu isolierende Rohrleitung anpassbar. Denkbar ist auch eine Ausgestaltung, bei der mehrere elastifizierte Bereiche in Längsachsenrichtung in gleichmäßigen Abständen über die gesamte Länge verteilt in der Rohrschale angeordnet sind. Auch diese Ausgestaltung erlaubt eine einfache Anpassung des Rohrisolierungselementes an die zu isolierende Rohrleitung.

Die Rohrschale ist im elastifizierten Bereich gewalkt. Das Walken der Rohrschale im elastifizierten Bereich hat die Wirkung, dass der Faserverbund in diesen Bereichen aufgelöst wird. Hierbei ist zu berücksichtigen, dass derartige Rohrisolierungselemente aus Mineralfasem, insbesondere Steinwollefasem oder Glasfasem hergestellt werden, welche Mineralfasem durch Bindemittel miteinander gebunden werden. Die Bindung erfolgt hierbei durch eine punktuelle Verbindung der einzelnen Fasem. Diese Verbindungspunkte werden durch das Walken der Rohrschale im elastifizierten Bereich aufgelöst, so dass die Rohrschale in diesem elastifizierten Bereich eine höhere Flexibilität aufweist, die auch dann gegeben ist, wenn die Rohrschale eine hohe Rohdichte aufweist.

Um die Handhabung des erfindungsgemäßen Rohrisolierungselementes zu vereinfachen ist vorgesehen, dass das Rohrisolierungselement aus mehreren Rohr schalen besteht, die in axialer Richtung aneinander anschließend angeordnet sind. Diese Ausgestaltung hat weiterhin den Vorteil, dass der Aufbau eines Rohr isolierungselementes beispielsweise bei einem sich über mehrere Stockwerke eines Gebäudes erstreckenden Schomsteinsystems händisch erfolgen kann, da die einzelnen Rohrschalen ein nur geringes Gewicht aufweisen und daher sowohl manuell transportiert als auch eingebaut werden können. Darüber hinaus hat diese Ausgestaltung den Vorteil, dass kürze Abschnitte in Form von Rohrschalen auch bei beengten Raumverhältnissen problemlos handhabbar sind. Eine Weiterbildung dieser Ausgestaltung sieht vor, dass die in axialer Richtung aneinander anschließenden Rohrschalen derart angeordnet sind, dass ihre elastifizierten Bereiche linienförmig ausgerichtet sind. Demzufolge liegen die elastifizierten Bereiche benachbarter Rohrschalen in axialer Richtung des Rohrisolierungselementes aneinander anstoßend.

Der elastifizierte Bereich der Rohrschalen ist vorzugsweise im Querschnitt achsensymmetrisch ausgebildet, wobei sich ein rechteckiger oder V-abschnittförmiger Querschnitt als besonders vorteilhaft erwiesen hat.

Weitere Merkmale und Vorteile der Erfindung ergeben sich aus der nachfolgenden Beschreibung der zugehörigen Zeichnung, in der bevorzugte Ausführungsformen der Erfindung dargestellt sind. In der Zeichnung zeigen:
- Figur 1: eine Rohrschale eines Rohrisolierungselementes in perspektivischer Ansicht;
- Figur 2: ein dreiteiliges Schomsteinsystem mit einem Rohrisolierungselement in teilweise freigeschnittener perspektivischer Ansicht;
- Figur 3: eine Rohrschale gemäß Figur 1 im Querschnitt und
- Figur 4: eine zweite Ausführungsform einer Rohrschale eines Rohrisolierungselementes in perspektivischer Ansicht.

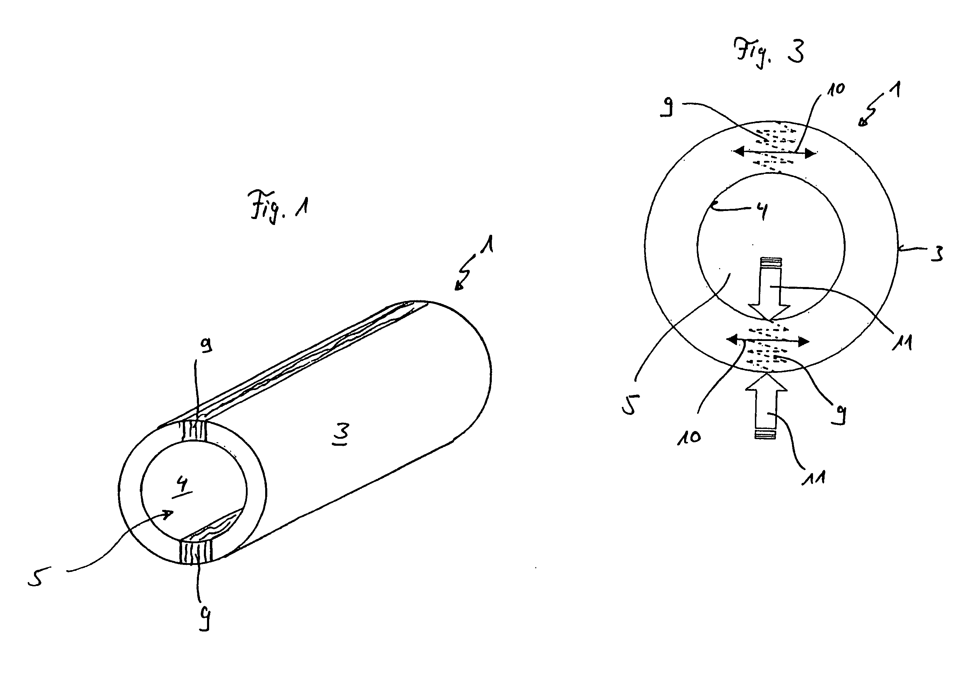

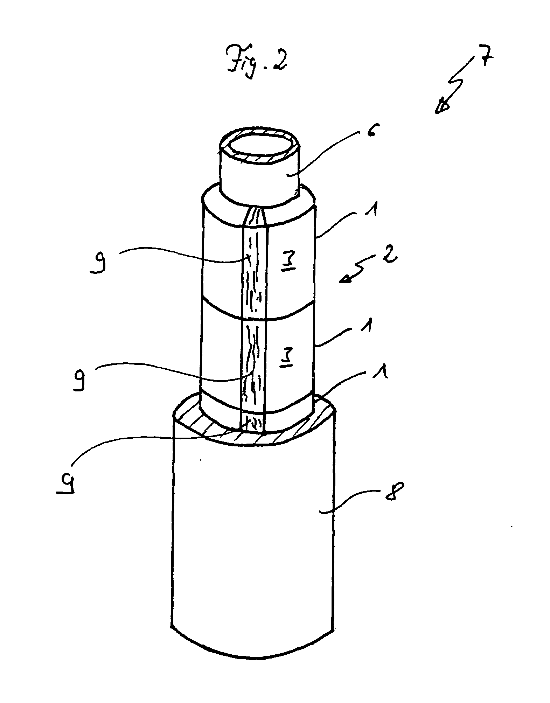

In Figur 1 ist eine Rohrschale 1 für ein Rohrisolierungselement 2 (Figur 2) in perspektivischer Ansicht dargestellt. Mehrere übereinander angeordnete Rohrschalen 1 bilden das Rohrisolierungselement 2 gemäß Figur 2. Jede Rohrschale 1 besteht aus mit Bindemitteln gebundenen Mineralfasem, wobei die Rohrschale 1 eine äu-ßere Mantelfläche 3 und eine innere Mantelfläche 4 aufweist, die im Wesentlichen parallel verlaufend angeordnet sind. Die Rohrschale 1 bildet somit einen zylindrischen Hohlraum 5 aus, der der Aufnahme einer Rohrleitung, beispielsweise eines in Figur 2 dargestellten Rauchrohres 6 eines Schornsteinsystems 7 dient. Das Schornsteinsystem 7 gemäß Figur 2 weist abschließend Mantelsteine 8 auf, die mit ihrer Innenfläche an der äußeren Mantelfläche 3 der Rohrschalen 1 anliegen.

Die Rohrschale 1 gemäß den Figuren 1 und 2 hat zwei radial ausgerichtete Bereiche 9, die radial gegenüberliegend in der Rohrschale 1 angeordnet sind. Die Bereiche 9 sind derart elastifiziert ausgebildet, dass die Rohrschale 1 in diesen Bereichen 9 eine gegenüber benachbarten Bereichen erhöhte Flexibilität in tangentialer und radialer Richtung aufweist.

Insbesondere in Figur 1 ist zu erkennen, dass sich die Bereiche 9 von der inneren Mantelfläche 4 bis zur äußeren Mantelfläche 3 erstrecken. In Figur 1 sind diese Bereiche 9 im Querschnitt rechteckförmig ausgebildet, während die Figur 2 eine Ausgestaltung der Bereiche 9 mit einem V-abschnittförmigen Querschnitt zeigt.

Die elastifizierten Bereiche 9 ermöglichen eine Verformung der Rohrschale 1 in der Art, dass der Durchmesser des Hohlraums 5 variabel ist, um die Rohrschale 1 an den Außendurchmesser beispielsweise des Rauchrohres 6 bzw. an den Innendurchmesser des Mantelsteins 8 anzupassen. Die elastifizierten Bereiche 9 erstrecken sich zu diesem Zweck über die gesamte Länge der Rohrschale 1, wobei Figur 2 die Anordnung mehrerer Rohrschalen 1 in Längsachsenrichtung übereinander zeigt. Hierbei sind die elastifizierten Bereiche 9 benachbarter Rohrschalen 1 linienförmig ausgerichtet.

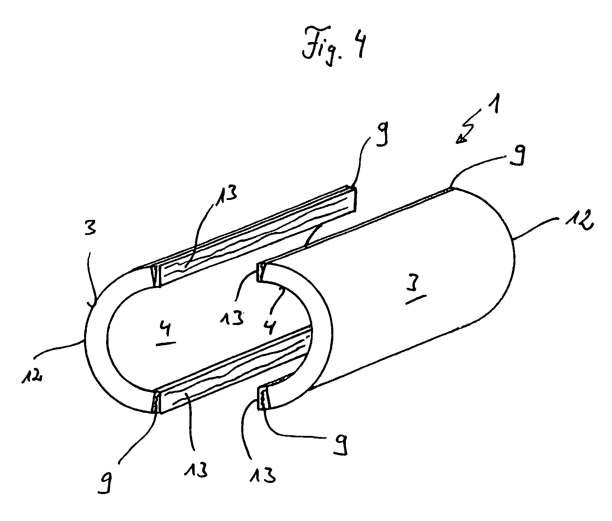

Die elastifizierten Bereiche 9 werden durch Walken der mit Bindemitteln gebundenen Mineralfasem in den dafür vorgesehenen Abschnitten der Rohrschale 1 erzeugt. In Figur 3 ist in einem Querschnitt der Rohrschale 1 die Richtung der Elastizität der elastifizierten Bereiche 9 durch Pfeile 10 angezeigt, während Pfeile 11 die Wirkrichtung einer Kraft auf die Rohrschale 1 während des Walkens der Rohrschale 1 zeigen. Die Pfeile 11 sind hierbei gleichbedeutend mit zumindest einer nicht näher dargestellten Walze sowie einem Gegenlager bzw. zwei gegenüberliegend angeordneten Walzen, die auf die entsprechenden Mantelflächen 3, 4 der Rohrschale 1 einwirken. Hierbei hat es sich als vorteilhaft erwiesen, die äußere Mantelfläche 3 mit einer Walze axial zu walken, während an der inneren Mantelfläche 4 lediglich ein Gegenlager vorgesehen ist. Beim Walken der Rohrschale 1 wird die Verbindung zwischen den einzelnen Mineralfasern im Wesentlichen aufgehoben, so dass auch bei einer hohen Rohdichte einer Rohrschale 1 eine entsprechende Flexibilität der elastifizierten Bereiche 9 erzielbar ist, die den Einbau entsprechender Rohrschalen 1 an unterschiedlichen Rohrleitungen mit entsprechenden Herstellungstoleranzen vereinfacht und verbessert.

Eine weitere Ausführungsform einer erfindungsgemäßen Rohrschale 1 ist in Figur 4 dargestellt. Die Rohrschale 1 gemäß Figur 4 besteht aus zwei halbkreisförmigen Elementen 12, die zusammengesetzt die Rohrschale 1 bilden. Die Elemente 12 weisen Stoßstellen 13 auf, die bei zusammengefügten Elementen 12 aneinanderliegend angeordnet sind.

Im Bereich der Stoßstellen 13 ist jeweils ein Abschnitt des elastifizierten Bereichs 9 ausgebildet. In den Bereichen zwischen den elastifizierten Bereichen 9 ist die Rohrschale bzw. sind die Elemente 12 der Rohrschale 1 formstabil ausgebildet.

Abweichend von den dargestellten Ausführungsbeispielen können weitere elastifizierte Bereiche 9 vorgesehen sein, welche die Variabilität der Rohrschalen 1 weitergehend erhöhen.

Entsprechend ausgebildete Rohrschalen 1 können problemlos Fertigungstoleranzen von Edelstahl- bzw. Keramikrohren hinsichtlich eines zu geringen Innendurchmessers bzw. eines zu großen Innendurchmessers des Hohlraums 5 ausgleichen. Hierdurch wird verhindert, dass beispielsweise entsprechende Edelstahlrohre bei der Montage aus der Rohrschale 1 herausfallen. Ferner sind die erfindungsgemäßen Rohrschalen 1 bzw. Rohrisolierungselemente 2 auch dann verwendbar, wenn durch Fertigungstoleranzen das aufzunehmende Edelstahl- bzw. Keramikrohr einen zu großen Durchmesser hat. Diese Vorteile gelten sowohl für die in Figur 4 dargestellte zweiteilige Ausführungsform der Rohrschale 1 als auch für die in den Figuren 1 und 2 dargestellten Vollschalen, die ebenfalls als Rohrschalen 1 bezeichnet sind.

## Patentansprüche

1. Rohrisolierungselement zur Wärme- und/oder Schalldämmung einer Rohrleitung (6) insbesondere eines Schornsteinsystems, mit zumindest einer Rohrschale (1) aus Mineralfasern, die eine äußere Mantelfläche (3) und eine innere Mantelfläche (4) aufweist, wobei die äußere und die innere Mantelfläche (3, 4) im wesentlichen parallel verlaufend angeordnet sind,
**dadurch gekennzeichnet,**
**daß** die Rohrschale (1) zumindest einen radial ausgerichteten Bereich (9) aufweist, der elastifiziert ist, so daß die Rohrschale (1) in diesem Bereich (9) eine gegenüber benachbarten Bereichen erhöhte Flexibilität in tangentialer und/oder radialer Richtung aufweist, wobei sich der Bereich (9) von der inneren Mantelfläche (4) zur äußeren Mantelfläche (3) erstreckt und wobei die Rohrschale (1) im elastifizierten Bereich (9) gewalkt ist.

2. Rohrisolierungselement nach Anspruch 1, **dadurch gekennzeichnet, daß** die Rohrschale (1) als Vollschale und demzufolge einteilig ausgebildet ist.

3. Rohrisolierungselement nach Anspruch 1, **dadurch gekennzeichnet, daß** die Rohrschale (1) mehrere elastifizierte Bereiche (9) aufweist.

4. Rohrisolierungselement nach Anspruch 3, **dadurch gekennzeichnet, daß** die elastifizierten Bereiche (9) radial gegenüberliegend in der Rohrschale (1) angeordnet sind.

5. Rohrisolierungselement nach Anspruch 3, **dadurch gekennzeichnet, daß** die elastifizierten Bereiche (9) in gleichmäßigen Abständen über den Umfang der Rohrschale (1) verteilt angeordnet sind.

6. Rohrisolierungselement nach Anspruch 1, **dadurch gekennzeichnet, daß** sich der elastifizierte Bereich (9) über die gesamte Länge der Rohrschale (1) erstreckt.

7. Rohrisolierungselement nach Anspruch 1, **gekennzeichnet durch** mehrere in axialer Richtung aneinander anschließende Rohrschalen (1).

8. Rohrisolierungselement nach Anspruch 7, **dadurch gekennzeichnet, daß** die in axialer Richtung aneinander anschließenden Rohrschalen (1) derart angeordnet sind, daß ihre elastifizierten Bereiche (9) linienförmig ausgerichtet sind.

9. Rohrisolierungselement nach Anspruch 1, **dadurch gekennzeichnet, daß** der elastifizierte Bereich (9) im Querschnitt achsensymmetrisch ausgebildet ist.

10. Rohrisolierungselement nach Anspruch 1, **dadurch gekennzeichnet, daß** der elastifizierte Bereich (9) einen rechteckigen oder v-abschnittförmigen Querschnitt aufweist.

11. Rohrisolierungselement nach Anspruch 1, **dadurch gekennzeichnet, daß** die Rohrschale (1) aus zwei oder mehreren Elementen (12) ausgebildet ist und daß der elastifizierte Bereich (9) an Stoßstellen (13) aneinander angrenzender Elemente (12) angeordnet ist.

## Claims

1. Tube insulating element for thermal and/or sound insulation of a conduit (6), in particular a chimney system, said tube insulating element comprising at least one pipe shell (1) made from mineral fibres including an outer cylindrical surface (3) and an inner cylindrical surface (4), which outer and inner cylindrical surfaces (3, 4) are arranged so that they extend substantially in parallel,
**characterized in**
**that** the pipe shell (1) includes at least one radially oriented portion (9) which is elastified in a manner such that the pipe shell (1) in this portion (9) has a flexibility which is higher compared to adjacent portions, in the tangential and/or radial directions, wherein the portion (9) extends from the inner cylindrical surface (4) to the outer cylindrical surface (3), and the pipe shell (1) is milled in the elastified portion (9).

2. Tube insulating element according to claim 1,
**characterized in that** the pipe shell (1) is formed as a monocoque shell and accordingly as one piece.

3. Tube insulating element according to claim 1,
**characterized in that** the pipe shell (1) includes several elastified portions (9).

4. Tube insulating element according to claim 3,
**characterized in that** the elastified portions (9) are radially oppositely arranged in the pipe shell (1).

5. Tube insulating element according to claim 3,
**characterized in that** the elastified portions (9) are arranged equally spaced over the circumference of the pipe shell (1).

6. Tube insulating element according to claim 1,
**characterized in that** the elastified portion (9) extends over the whole length of the pipe shell (1).

7. Tube insulating element according to claim 1,
**characterized by** several pipe shells (1) joining each other in the axial direction.

8. Tube insulating element according to claim 7
**characterized in that** the pipe shells (1) joining each other in the axial direction are arranged in a manner such that their elastified portions (9) are oriented in a linear fashion.

9. Tube insulating element according to claim 1
**characterized in that** the elastified portion (9) is formed axially symmetrical in cross section.

10. Tube insulating element according to claim 1
**characterized in that** the elastified portion (9) has a rectangular or V-segment shaped cross section.

11. Tube insulating element according to claim 1,
**characterized in that** the pipe shell (1) is formed from two or more elements (12), and that the elastified portion (9) is arranged at the joints (13) of mutually adjacent elements (12).

## Revendications

1. Elément d'isolation de tuyau pour l'isolation thermique et/ou acoustique d'une tuyauterie (6), en particulier d'un système de cheminée, avec au moins une coque de tuyau (1) en fibres minérales qui présente une surface d'enveloppe extérieure (3) et une surface d'enveloppe intérieure (4), la surface d'enveloppe extérieure et la surface d'enveloppe intérieure (3, 4) étant placées substantiellement parallèlement l'une à l'autre,
**caractérisé en ce**
**que** la coque de tuyau (1) présente au moins une zone orientée radialement (9) qui est élastifiée si bien que la coque de tuyau (1) présente, dans cette zone (9), une flexibilité dans le sens tangentiel et/ou radial qui est accrue par rapport aux zones voisines, la zone (9) s'étendant de la surface d'enveloppe intérieure (4) à la surface d'enveloppe extérieure (3) et la coque de tuyau (1) étant assouplie dans la zone élastifiée (9).

2. Elément d'isolation de tuyau selon la revendication 1, **caractérisé en ce que** la coque de tuyau (1) est configurée comme coque pleine et par conséquent en une partie.

3. Elément d'isolation de tuyau selon la revendication 1, **caractérisé en ce que** la coque de tuyau (1) présente plusieurs zones élastifiées (9).

4. Elément d'isolation de tuyau selon la revendication 3, **caractérisé en ce que** les zones élastifiées (9) sont placées en face radialement dans la coque de tuyau (1).

5. Elément d'isolation de tuyau selon la revendication 3, **caractérisé en ce que** les zones élastifiées (9) sont placées réparties à des intervalles réguliers sur la périphérie de la coque de tuyau (1).

6. Elément d'isolation de tuyau selon la revendication 1, **caractérisé en ce que** la zone élastifiée (9) s'étend sur toute la longueur de la coque de tuyau (1).

7. Elément d'isolation de tuyau selon la revendication 1, **caractérisé par** plusieurs coques de tuyau (1) se suivant l'une l'autre dans le sens axial.

8. Elément d'isolation de tuyau selon la revendication 7, **caractérisé en ce que** les coques de tuyau qui se suivent l'une l'autre dans le sens axial sont placées de telle manière que leurs zones élastifiées (9) sont orientées en forme de lignes.

9. Elément d'isolation de tuyau selon la revendication 1, **caractérisé en ce que** la zone élastifiée (9) est configurée de section symétrique à l'axe.

10. Elément d'isolation de tuyau selon la revendication 1, **caractérisé en ce que** la zone élastifiée (9) présente une section rectangulaire ou en forme de section de V.

11. Elément d'isolation de tuyau selon la revendication 1, **caractérisé en ce que** la coque de tuyau (1) est configurée par deux ou plusieurs éléments (12) et que la zone élastifiée (9) est placée à des jointures (13) d'éléments adjacents (12).
